# EUROPÄISCHE PATENTSCHRIFT

(11) **EP 1 261 958 B1**
(45) Veröffentlichungstag und Bekanntmachung des Hinweises auf die Patenterteilung: **24.03.2004**
(21) Anmeldenummer: 01949047.3
(22) Anmeldetag: 31.01.2001
(51) Int. Cl.: G09B 5/06

(54) **VERFAHREN UND VORRICHTUNG ZUM UNTERSTÜTZEN EINER PERSON BEI DER AUSFÜHRUNG GENAUIGKEIT ERFORDERNDER ARBEITSVORGÄNGE**
METHOD AND DEVICE FOR ASSISTING AN INDIVIDUAL DURING THE EXECUTION OF WORKING PROCESSES THAT REQUIRE PRECISION
PROCEDE ET DISPOSITIF PERMETTANT DE SOUTENIR UNE PERSONNE LORS DE L'EXECUTION DE PROCESSUS DE TRAVAIL EXIGEANT DE LA PRECISION

(30) Priorität: 03.02.2000 DE 10004663
(43) Veröffentlichungstag der Anmeldung: 04.12.2002
(73) Patentinhaber: IWKA Aktiengesellschaft, D-76135 Karlsruhe (DE)
(72) Erfinder: GERHARDT, Axel, 76227 Karlsruhe (DE); HAAG, Michael, 76227 Karlsruhe (DE)
(74) Vertreter: Lempert, Jost, Dipl.-Phys. Dr. rer.nat.
(86) Internationale Anmeldenummer: PCT/EP2001/001037
(87) Internationale Veröffentlichungsnummer: WO 2001/057700

(56) Entgegenhaltungen:
- GB-A- 2 186 237
- US-A- 4 224 744
- US-A- 4 413 277
- US-A- 4 459 114
- US-A- 5 791 907
- US-A- 6 018 730

## Beschreibung

Die Erfindung betrifft ein Verfahren und eine Vorrichtung zum Unterstützen einer Person bei der Ausführung Wiederholgenauigkeit erfordernder Arbeitsvorgänge nach dem Oberbegriff des Anspruchs 1 bzw. des Anspruchs 9.

Die seit der Industrialisierung verstärkte Automatisierung von Herstellungs- und allgemeinen Arbeitsvorgängen hatte als wesentlichen Erfolg die Sicherung einer hohen Qualität der Arbeitsergebnisse und insbesondere von Arbeitsprodukten durch Gewährleistung einer hohen Genauigkeit der Durchführung der Arbeitsschritte, insbesondere einer hohen Wiederholgenauigkeit. Hierdurch konnten Ausschuss reduziert und Kosten der Gewährleistung niedrig gehalten werden. In Kauf genommen wurden dabei hohe Investitions- und damit Anfangskosten bei erhöhter Automatisierung und Einführung neuer Vorrichtungen und Maschinen mit höherem Automatisierungsgrad. Die hohen Anfangskosten werden zunehmend als Nachteil angesehen.

Beim Gegenstand der US 4,413,277 wird ein Arbeitender bei der Durchführung von Arbeitsschritten von einem Ingenieur überwacht, der die für jeden elementaren Schritt benötigte Zeit misst, weiterhin wird eine Videoaufnahme vorgenommen, wobei gleichzeitig eine Videoaufnahme der gemessenen verstrichenen Zeiten erfolgt. Nach Durchführung des gesamten Vorganges folgt eine Wiedergabe der Aufnahme mit einer Vielzahl von Darstellungen der verstrichenen Zeit bezüglich der einzelnen Arbeitsschritte.

Der Erfindung liegt die Aufgabe zugrunde, bei durch Personen durchgeführte Arbeitsvorgängen eine unmittelbare Qualitätssicherung unter Vermeidung von Ausschuss zu erreichen und so eine Reduzierung der Automatisierung durch verstärkten Einsatz von Personen bei Arbeitsvorgängen zu ermöglichen.

Erfindungsgemäß wird die genannte Aufgabe mit einem Verfahren der gattungsgemäßen Art gelöst, welches weiterhin die kennzeichnenden Merkmale des Anspruchs 1 aufweist. Zur Lösung der Aufgabe sieht die Erfindung darüber hinaus eine gattungsgemäße Vorrichtung mit den kennzeichnenden Merkmalen des Anspruchs 9 vor.

Unter Verhalten werden hier sowohl bewusst vorzunehmende Handlungen der Person bei und vor der Durchführung des Arbeitsvorganges aber auch unbewusste Verhaltensweisen, insbesondere die ein Nachlassen der Konzentration zeigen, verstanden. Elemente des normalen Verhaltens der ausführenden Person werden im folgenden kurz als Arbeits-Verhaltenselemente, Elemente des normalen Verhaltens als Mess-Verhaltenselemente, das Verhalten im Vorfeld eines Arbeitsschritts als Vorfeld-Verhalten und das Verhalten bei Ausführung mindestens eines Arbeitsschritts als Ausführungs-Verhalten bezeichnet.

Im Rahmen der Erfindung bezieht sich der Begriff Genauigkeit sowohl auf das Arbeitsergebnis aber auch auf den Arbeitsvorgang, und insbesondere alle relevanten Parameter derselben. Die Erfassungs- oder Sensoreinrichtung kann jegliche physikalischen und chemischen Sensoren umfassen.

Es erfolgt insbesondere eine Analyse des Verhaltens der Person bei der Durchführung eines Arbeitsvorganges, eine Identifikation der qualitätsbeeinflussenden Elemente des Verhaltens der Person und eine Reduktion des Verhaltens auf wesentliche, charakteristischen Elemente, die eben im Hinblick auf die Durchführung des eigentlichen Arbeitsvorganges und dessen korrekter Ausführung bedeutsam sind. Es wird ein Vergleich hinsichtlich dieser Verhaltenselemente, also entsprechender Arbeits-Verhaltenselemente mit den Norm-Verhaltenselementen durchgeführt, wobei allerdings zulässige Abweichungen - wie hinsichtlich eines Bewegungsablaufs, eines zulässigen Änderns einer Reihenfolge - toleriert werden, so dass nur bei unzulässigen Abweichungen eine Aktion ausgeführt wird.

Während bisher bei einem Herstellungsprozess eine Qualitätskontrolle erst nach Herstellung des Produktes erfolgt ist und nicht den Anforderungen genügende Produkte Ausschuss ergaben bzw. mit zusätzlichen erhöhten Kosten nachgebessert werden mussten, sieht die Erfindung vor, dass eine Person während der Ausführung von Arbeitsvorgängen, insbesondere der Herstellung oder des Zusammenbaus von Produkten, aber auch bei der Durchführung anderer Tätigkeiten, durch technische Maßnahmen unterstützt wird, so dass sie ihre Arbeitstätigkeit mit höherer Genauigkeit, insbesondere höherer Wiederholgenauigkeit ausführen kann. Hierdurch wird erreicht, das Arbeitsvorgänge, die bisher im Hinblick auf die Erzielung einer hohen und gleichbleibenden Qualität, weil sie mit hoher Wiederholgenauigkeit hergestellt werden mussten, automatisiert wurden, durch natürliche Personen ausgeführt werden können, die in der erfindungsgemäßen Weise bei der Ausführung ihrer Tätigkeit durch technische Maßnahmen unterstützt werden, dennoch aber in flexibler Weise eine hohe Qualität zu sichern. Hierdurch ist es möglich, den Automatisierungsgrad in der Arbeitswelt, insbesondere in der Produktion zu begrenzen und nicht weiter auszuweiten sowie gegebenenfalls für bisher automatisierte Vorgänge, bei denen aufgrund der hohen Investitions und damit Anfangskosten der Automatisierung durch diese Automatisierung kein Kostenvorteil erreicht wird, wieder Personen - auch unter Inkaufnahme höherer regelmäßiger Arbeitskosten - einzusetzen, wodurch sich als Nebenaspekt der Erfindung eine höhere Beschäftigung ergeben kann.

Damit ist die Erfindung vorteilhaft auch bei der Herstellung kundenspezifischer Produkte mittels Massenproduktion einsetzbar sowie darüber hinaus im Prototypenbau oder in Kleinserien, wo es bisher schon nicht lohnenswert war, ein automatisches Fertigungssystem einzurichten. Es können Arbeiter eingesetzt werden, denen in relativ kurzer Zeit komplexe Arbeitsabläufe vermittelt werden können, wobei sie zur Sicherung eines hohen Qualitätsniveaus, wie es bei der vollautomatischen Produktion gegeben ist, als erfindungsgemäße mitlaufende inkrementelle Qualitätskontrolle eingesetzt wird.

Bei dem nach der Erfindung vorgesehenen Abbild des Norm-Arbeits-Verhaltens im Zusammenhang mit der Durchführung eines Arbeitsvorganges handelt es sich um ein digitales Abbild. Ein solches Abbild kann durch Modellbildung bzw. durch rechnerische Vorgaben des Norm-Verhaltens der die Aktion ausführenden Person gewonnen sein. Es kann sich aber auch dabei um das digitalisierte Abbild einer optischen Aufnahme des Verhaltens im Zusammenhang mit dem Arbeitsvorgang handeln, gegebenenfalls lediglich in einzelnen Verhaltensphasen oder auch durch datenreduzierende Abstrahierung. Bei Vorgabe des Norm-Verhaltens durch Modellbildung, wird das erfasste Arbeits-Verhalten nach Digitalisierung Verarbeitungsvorgängen unterworfen, die es einem Vergleich mit dem Abbild des Norm-Verhaltens zugänglich machen. Im letzteren Falle bei der optischen Erfassung des Norm-Verhaltens erfolgt die Erfassung der regelmäßigen Ausführung des Arbeitsvorganges und des dabei gegebenen Arbeits-Verhaltens in gleicher Weise und unterliegt den gleichen Verarbeitungsschritten wie bei Zuweisung des Normverhaltens, um ein Abbild des Arbeitsverhaltens zu schaffen, das mit dem Abbild des Norm-Verhaltens verglichen werden kann.

Im übrigen muss eine Erfassung des Arbeitsverhalten nicht in visueller Weise erfolgen, sondern kann auch mit anderen Sensoren erfolgen.

Die auslösende Aktion kann aus optischen oder akustischen Ereignissen bestehen, insbesondere in der Ausgabe von Sprachanweisungen an die den Arbeitsvorgang ausführende Person, indem diese dann beispielsweise sprachlich und insbesondere freundlich darauf hingewiesen wird, mit erhöhter Konzentration zu arbeiten. Der Inhalt der Aktion ist dabei im vorliegenden Zusammenhang unwesentlich; wesentlich ist, dass in technischer weise eine Aktion ausgelöst wird, wie im einfachsten Falle ein optisches oder akustisches Signal.

Es kann grundsätzlich vorgesehen sein, dass lediglich das Arbeits-Verhalten im unmittelbaren Zusammenhang mit der Ausführung des Arbeitsschrittes bzw. eines Arbeits- bzw. Fertigungsschrittes erfasst wird und bei Abweichungen bei diesem Schritt eine der genannten Aktionen ausgelöst wird. Dies bedingt aber oft, dass der Arbeitsschritt schon in falscher Weise begonnen wurde und eine Korrektur erforderlich ist, deren Vorteil gegenüber Nachbesserung nach einer Endkontrolle allerdings darin besteht, dass die den Arbeitsschritt ausführende Person selbst und unmittelbar die Korrektur vornehmen kann.

In äußerst bevorzugter Ausgestaltung ist aber vorgesehen, dass das Verhalten der Person im Vorfeld (Vorfeld-Verhalten) des eigentlichen, die Genauigkeit erfordernden Arbeitsvorganges erfasst und schon bei Abweichungen im Vorfeld-Verhalten eine Aktion ausgelöst wird. Hierdurch wird das Arbeits-Verhalten der den Arbeitsvorgang ausführenden Person schon im Vorfeld der eigentlichen Arbeits- oder Fertigungsschritte erfasst und aufgrund von Abweichungen dieses Verhaltens gegenüber dem Norm-Verhalten kann festgestellt werden, dass die Person beispielsweise nicht mehr mit der erforderlichen Konzentration ihre Tätigkeit ausführt und daher fehlerhafte Arbeits- oder Fertigungsschritte zu erwarten sind, so dass sie im Vorfeld der eigentlichen Durchführung eines solchen Arbeitsschrittes schon durch eine Aktion "alarmiert" oder darauf hingewiesen werden kann und aufgrund eines solchen Hinweises die zu erbringenden Arbeitsschritte dennoch in richtiger genauer Weise ausführt.

Auch wenn das gesamte Arbeits-Verhalten im Zusammenhang mit der Durchführung eines Arbeitsvorganges über eine gewisse Zeit im Vorlauf gegenüber der Ausführung des eigentlichen Arbeitsschrittes erfasst wird, so ist es sinnvoll, insbesondere zur Reduktion der zu verarbeitenden Datenmenge und damit Erzielung einer höheren Reaktionsgeschwindigkeit im Rahmen der Durchführung des erfindungsgemäßen Verfahrens bzw. einer diese ausführenden Vorrichtung bis zur Auslösung einer Aktion gegebenenfalls lediglich gewisse Phasen des Norm-Verhaltens und des Arbeits-Verhaltens zu erfassen, und zu speichern und diese Phasen miteinander zu vergleichen.

Es ist nicht immer so, dass bei der wiederholten Durchführung von Arbeitsvorgängen schon die kleinste Abweichung eines Arbeits-Verhaltens vom vorgegebenen Norm-Verhalten einen Fehler beim eigentlichen Arbeits- oder Herstellungsvorgang bedingt; es sind vielmehr gewisse Abweichungen tolerierbar, wobei die Grenzen in einem rechnerischen oder quantifizierten Abbild des Verhaltens hinsichtlich einzelner Verhaltenselemente durchaus unterschiedlich sein können. Die Erfindung sieht daher in bevorzugter Ausgestaltung vor, dass Toleranzbereiche zu den Norm-Verhaltenselementen festgelegt und erst bei Überschreiten der Toleranzbereiche eine Aktion ausgeführt wird.

Über die reine Sicherstellung der Qualität menschlicher Arbeit hinaus kann das erfindungsgemäße Verfahren eine erfindungsgemäße Vorrichtung auch zur technisch unterstützten Einweisung von Arbeitskräften direkt am Arbeitsplatz dienen. Wenn beispielsweise eine Montagefolge bestimmt und modelliert ist, können durch eine erfindungsgemäße Einrichtung im Rahmen des erfindungsgemäßen Verfahrens einem neuen Arbeiter Anweisung zu jedem einzelnen Arbeitsschritt gegeben und es kann dessen ordnungsgemäße Durchführung sofort kontrolliert werden. Der Arbeiter lernt so die einzelnen Arbeitsschritte, so dass weniger Anweisungen erfolgen, bis schließlich ein Übergang in den Normalbetrieb erfolgt und nur im Fehlerfall Aktionen mit Anweisungen ausgelöst werden.

Weitere Vorteile und Merkmale der Erfindung ergeben sich aus den Ansprüchen aus der nachfolgenden Beschreibung, in der ein Ausführungsbeispiel der Erfindung unter Bezugnahme auf die Zeichnungen im einzelnen erläutert ist. Dabei zeigt:
- Fig. 1: ein Ablaufdiagramm einer bevorzugten Ausgestaltung des erfindungsgemäßen Verfahrens;
- Fig. 2: ein Ablaufdiagramm veränderten Teilschnitts gegenüber der Fig. 1;
- Fig. 3: eine schematische Prinzipdarstellung in der erfindungsgemäßen Vorrichtung;
- Fig. 4: Arbeitstisch mit Bauteilfächern zur Herstellung von Steuereinheiten für ein automatisches Getriebe;
- Fig. 5: ein Diagramm mit automatisch erhaltenen bereinigten Ergebnissen der Merkmalsextraktion einer Montage einer Steuereinheit für ein automatisches Getriebe;
- Fig. 6: eine Tabelle der einzelnen Griffvorgänge bei sechs Montagezyklen zur Herstellung einer Einheit eines automatischen Getriebes;
- Fig. 7: ein Ablaufdiagramm der Verfahrensschritte bei der Erfassung der Herstellung einer Steuereinheit für ein automatisches Getriebe.

Das erfindungsgemäße Verfahren beinhaltet zunächst eine Definition oder optische Aufnahme des Norm-Verhaltens einer einen bestimmten Arbeitsvorgang oder eine Tätigkeit ausführenden Person. Dies beinhaltet das Verhalten der Person, insbesondere auch die Bewegungen bei Ausführungen des eigentlichen Arbeitsschrittes, wie beim Zusammenbau eines aus mehreren Teilen bestehenden Gegenstandes oder der Herstellung oder Bearbeitung eines Produktes. Das Norm-Verhalten beinhaltet weiterhin Bewegungsvorgänge im Vorfeld der eigentlichen Arbeitsschritte.

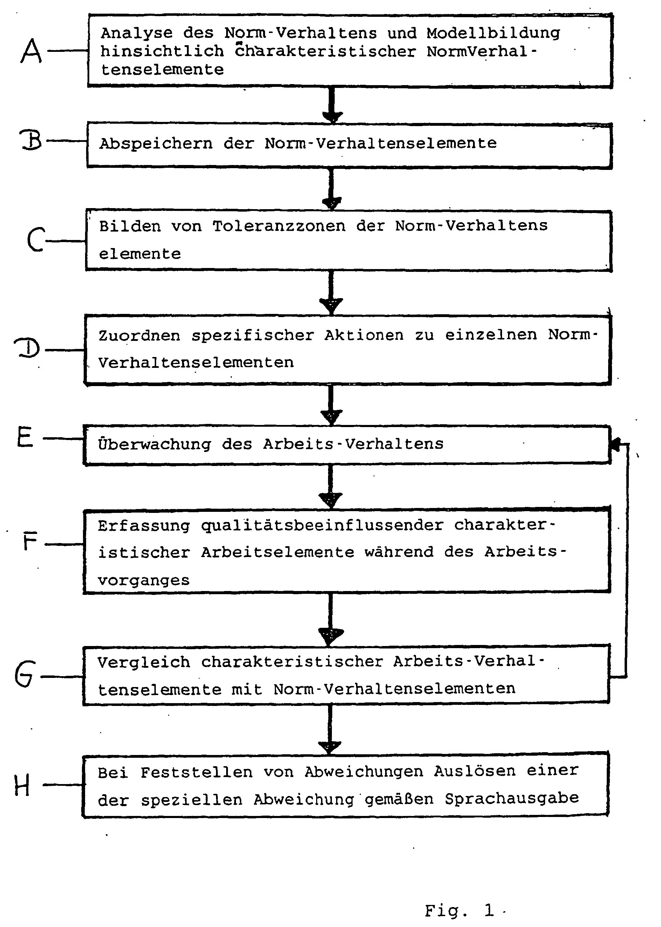

Dieses Norm-Verhalten wird als Abbild gespeichert, wobei, wie gesagt, dieses Abbild hier aufgrund einer optischen Aufnahme entstanden oder aber durch rechnerische und mathematische Vorgaben gegeben sein kann, insbesondere bei nicht optischer Aufnahme des Norm Verhaltens sieht das dargestellte konkrete Beispiel des Verfahrens vor, dass eine Analyse des Norm-Verhaltens vorgenommen und lediglich charakteristische Norm-Verhaltenselemente aus diesem Verhalten extrahiert und zum späteren Vergleich festgehalten (Fig. 1, Schritt A) und gespeichert werden (Schritt B).

Da nicht jede kleinste Abweichung vom Normverhalten schon allein die Qualität beeinflussenden Fehler bei Ausführung der eigentlichen Arbeitsschritte bedingen muss, folgt in einem weiteren Schritt (Schritt C) ein Bilden von Toleranzzonen zu den einzelnen Norm-Verhaltenselementen. Entweder wird grundsätzlich bei Feststellung einer Abweichung des tatsächlichen (Arbeits-Verhaltens) von dem Norm-Verhalten eine bestimmte Reaktion ausgelöst oder aber es ist möglich, einzelnen Norm-Verhaltenselementen spezifische Aktionen zuzuordnen, beispielsweise je nach Verhaltenselement, zu dem eine Abweichung festgestellt wurde, eine eigene spezifische Anweisung (Schritt D).

Während des eigentlichen wiederholten Arbeitsprozesses erfolgt eine Erfassung des Arbeitsverhaltens der Person bzw. des Arbeiters (Schritt E). Dabei werden qualitätsbeeinflussende charakteristische Arbeits-Verhaltens-Elemente während des Arbeitsvorganges erfasst (Schritt F). Anschließend wird ein Vergleich der charakteristischen Arbeits-Verhaltens-Elemente mit den Norm-Verhaltenselementen, gegebenenfalls unter Berücksichtigung von Toleranzzonen durchgeführt (Schritt G). Werden dann Abweichungen festgestellt, so erfolgt das Auslösen einer Aktion, wie eine Sprachausgabe, insbesondere einer der speziellen Abweichung gemäßen Sprachausgabe (Schritt H).

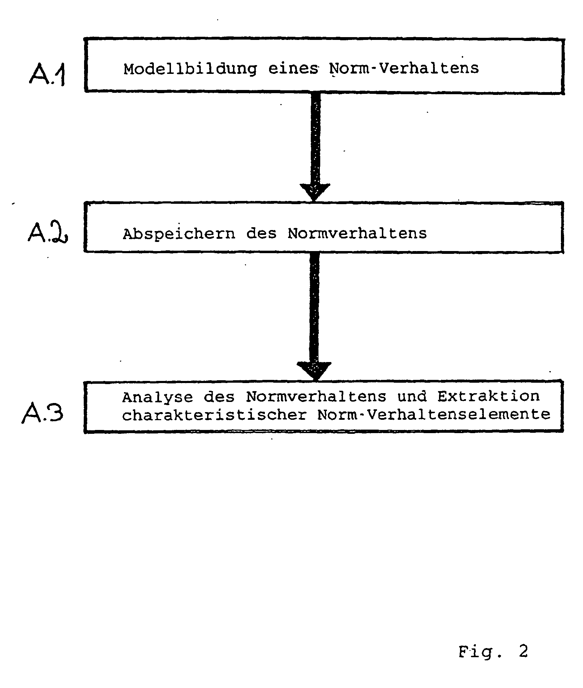

Während der Ablauf der Fig. 1 davon ausgeht, dass eine Modellbildung hinsichtlich der qualitätsbestimmenden charakteristischen Norm-Verhaltenselemente erfolgt, ist es auch grundsätzlich möglich, während der Durchführung eines exaktausgeführten Arbeitsvorganges das hierbei gegebene Norm-Verhalten der Person aufzunehmen und zwar in der Weise, in der das spätere Arbeitsverhalten erfasst wird, d.h. mittels einer für den entsprechenden Arbeitsvorgang als geeignet angesehenen Sensorik, beispielsweise durch eine Videoaufnahme. Es können aber auch andere geeigneten Sensoren eingesetzt werden. In einem solchen Falle kann Schritt A der Fig. 1 durch die Schritte A.1 bis A.3 der Fig. 2 ersetzt werden. Es erfolgt zunächst beispielsweise eine optische Aufnahme des Normverhaltens; diese Aufnahme wird abgespeichert (Schritt A.2) und anschließend mathematisch analysiert und es werden den charakteristischen, die qualitätsbestimmenden Norm-Verhaltenselemente extrahiert (Schritt A.3) und diese dann zur weiteren Verwendung entsprechend dem Schritt B der Fig. 1 abgespeichert. Der weitere Ablauf des Verfahrens erfolgt dann entsprechend der Fig. 1.

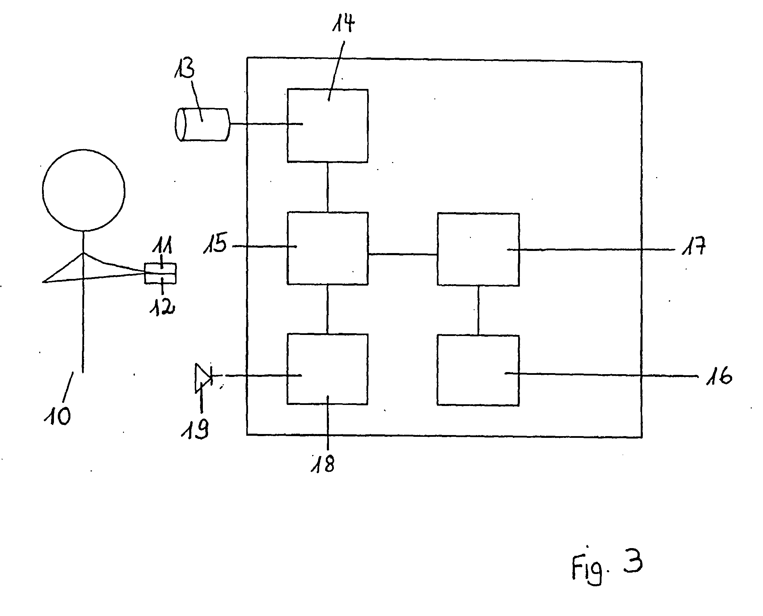

Eine schematische Darstellung einer Ausführungsform einer erfindungsgemäßen Vorrichtung zum Unterstützen einer Person der Ausführung Genauigkeit erfordernder Arbeitsvorgänge findet sich in der Fig. 3.

Mit 1.10 ist eine Person bezeichnet, die zwei Teile 1.11, 1.12 zusammenfügt. Das Verhalten der Person 1.10 wird durch eine Sensoreinrichtung 1.13 in Form einer optischen Beobachtungseinrichtung, wie einer Videokamera, während des Arbeitsvorganges aufgenommen. Es ist eine Einrichtung 1.14 zur Extraktion charakteristischer Arbeits-Verhaltenselemente vorgesehen, die die qualitätsbestimmenden Verhaltenselemente des Verhaltens extrahiert, also bei einer Videoaufnahme der Einrichtung zur Bild- oder Bildfolgenauswertung.. In einer Vergleichseinrichtung 1.15 werden die charakteristischen Arbeits-Verhaltenselemente mit Norm-Verhaltenselementen verglichen, die im Ausführungsbeispiel der Fig. 3 in einer Einrichtung zur Modellbildung des Arbeitsverhaltens 1.16 bestimmt und zum Vergleich in einer Speichereinrichtung 1.17 abgelegt sind. Der Vergleichseinrichtung 1.15 schließt sich eine Einrichtung 1.18 zur Ausgabe einer Aktion, beispielsweise über Sprachausgabeeinheit 1.19 an.

Ein konkretes Ausführungsbeispiel der Erfindung beinhaltet beispielsweise das Fügen von Karosseriebauteilen durch manuelles Widerstandsschweißen als Alternative zum Schweißen mittels Robotern oder Vielpunktschweißanlagen. Bei manuellem Schweißen mittels Handschweißzangen bleibt es der den Schweißvorgang ausführenden Person bzw. dem Arbeiter überlassen, für jede Schweißstelle das zugehörige Schweißprogramm zu den wesentlichen Parametern, wie Stromverlauf, Schweißzeit und Anpressdruck einzustellen. Beim Schweißen muss die Zange während des Schweißvorganges mit ihren Schweißzangenspitzen möglichst senkrecht zu dem zu verschweißenden Blechen gehalten werden. Ein Arbeiter kann, bedingt durch Ermüdungserscheinungen oder Ablenkungen, gelegentlich vergessen, ein Schweißprogramm umzustellen oder die Schweißzange korrekt zu halten. Eine daraus eventuell resultierende minderwertige Schweißverbindung kann zwar im Zuge der Qualitätssicherung im Laufe der weiteren Fertigungsschritte entdeckt werden. Der Aufwand zur zerstörungsfreien Prüfung jeder einzelnen Schweißstelle sowie zur Behebung eines detektierten Fehlers ist jedoch nicht unerheblich. Erfindungsgemäß wird zur Unterstützung des Arbeiters während des Schweißvorganges fortlaufend die dreidimensionale Position und Orientierung der Schweißzangenspitzen relativ zum Werkzeug bestimmt. Wenn sich das Werkstück und damit seine Schweißstellen stets an einer vorbekannten, festen Position befinden, kann von der bestimmten Position der Schweißzangenspitzen auf die durch den Arbeiter vorgesehene Schweißstelle rückgeschlossen werden. Das Werkstück muss allerdings zur Bearbeitung sich nicht unbedingt an einer vorgegebenen festen Position befinden. Die Position des Werkstücks kann ebenfalls durch Sensoreinrichtungen miterfasst werden. Noch bevor der eigentliche Schweißvorgang einsetzt, lässt sich so prüfen, ob das gerade eingestellte Schweißprogramm für die gegebene Schweißposition die richtige ist, und ob die relative Lage der Schweißzange zum Werkstück innerhalb vorgesehener Toleranzen liegt.

Die Positionsbestimmung kann dabei durch interne Sensoren, wie Beschleunigungssensoren, externe Sensoren, wie eine Videokamera, oder kombinierte Sensoren, wie zum Beispiel durch funkbasierte Positionsbestimmung, erfolgen. Zur Modellbildung erfolgt eine Vorgabe der dreidimensionalen Position aller Schweißpunkte des Werkstücks zusammen mit dem jeweils passenden Schweißprogramm sowie der optimalen Relativlage der Schweißzange während des Schweißvorganges.

Zur Ermittlung von Abweichungen erfolgt die Bestimmung desjenigen vormodellierten Schweißpunktes, dessen dreidimensionaler Position am nächsten bei der aktuell geschätzten Schweißzangenposition liegt. Es erfolgt ein Vergleich des aktuell eingestellten Schweißprogramms mit dem für diese Schweißposition vorgesehenen Schweißprogramm sowie ein Vergleich der Orientierung der Schweißzange mit der für diesen Schweißpunkt optimalen Orientierung.

Bei Abweichungen folgt die Information des Arbeiters durch Licht- oder Tonsignale oder natürliche Sprachausgabe, wie durch einen Hinweis, ein bestimmtes Schweißprogramm einzustellen oder die Lage der Zange zu korrigieren.

Die Tätigkeitserfassung erfolgt weiterhin dahingehend, dass sämtliche Schweißvorgänge an den richtigen Schweißpunkten durchgeführt werden. Versucht der Arbeiter eine Schweißung an einer nicht vorgesehenen Stelle, erfolgt ein Warnsignal.

Weiter kann auf die Einhaltung einer vorgegebenen Reihenfolge der einzelnen Schweißvorgänge geachtet werden: Übergeht der Arbeiter eine von der vorgegebenen Reihenfolge vorgesehene Schweißung, so erfolgt ein Warn- oder Fehlersignal. Alternativ können unterschiedliche Reihenfolgen der Schweißvorgänge toleriert werden und nur erfasst werden, ob vorgegebene Schweißvorgänge am Ende eines Arbeitsabschnitts sämtlich ausgeführt wurden. Die Tolerierung kann sich dabei auf alle Arbeitsvorgänge (Schweißvorgänge an einem Produkt), also den gesamten Arbeitszyklus, oder aber nur eine oder mehrere Teilmengen derselben als Arbeitsabschnitt(e) beziehen.

Als Sensor wird dabei in bevorzugter Weise eine Videokamera eingesetzt. Die Videoauswertung und Analyse der aufgenommenen Videoaufnahme basiert auf einem modellgestützten Verfolgungsverfahren, bei dem ein vorgegebenes 3-D-Modell des zu verfolgenden Objekts in das Videobild projiziert und aus der Differenz zu extrahierten Bildmerkmalen die aktualisierte Positon-Orientierungsschätzung ermittelt wird. Das Objekt kann dabei zusätzlich mit Markierungen versehen werden, d.h. an bestimmten charakteristischen Stellen Fälligkeits- oder Farbunterschiede aufweisen, wie beispielsweise durch helle Kreise oder Kreuze auf dunklem Hintergrund, die sich einfach im videobild detektieren lassen und aus deren Bewegung auf die Gesamtbewegung des Objekts im Raum zurückgeschlossen werden kann.

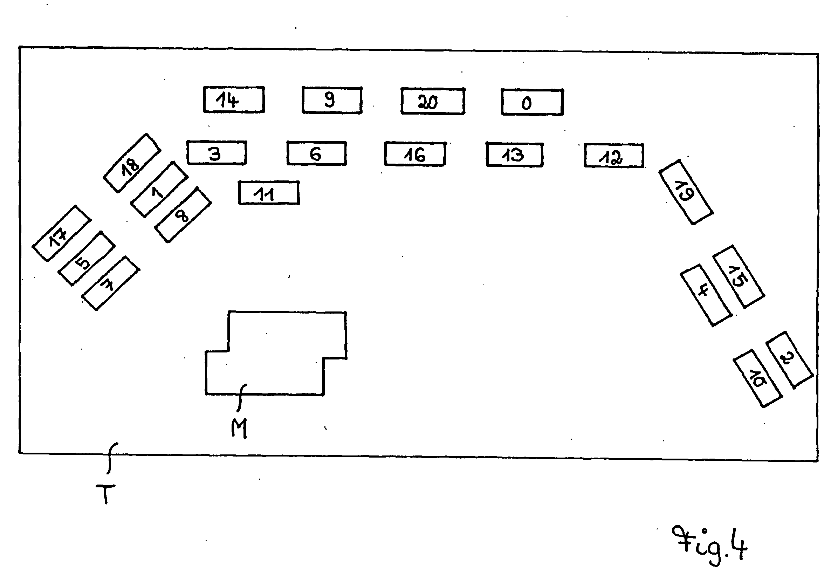

Ausführungsbeispiele der Erfindung beinhalten die manuelle Getriebemontage oder die Montage einer Steuereinheit für ein automatisches Getriebe, bei denen als typische Fehler das Weglassen von Teilen oder das Montieren von Teilen in einer falschen Reihenfolge auftreten. Auch hier wird bevorzugt eine Videokamera als Sensoreinrichtung 1.13 (Fig. 3) eingesetzt, die detektiert, in welcher Reihenfolge der Arbeiter 1.10 in die Fächer 0-20 (Fig. 4) greift, welche die für den Montagevorgang benötigten Bauteile enthalten. Damit lässt sich sowohl eine falsche Reihenfolge beim Zusammensetzen der Bauteile erkennen als auch das Weglassen einzelner Bauteile. Dabei kann schon im Vorfeld der Aufnahme eines Teils erfasst werden, ob der Arbeiter nach Aufnahme eines ersten Teils aus einer Position seine Hand zur Position eines Teils bewegt, das nicht sogleich mit dem ersten Teil zu verbinden ist, bevor nicht ein anderes Teil vorher mit dem ersten Teil verbunden wurde. Unterschiedliche Reihenfolgen des Zusammensetzens werden toleriert, sofern sie sich nicht negativ auf die Qualität auswirken.

Der Einsatz der Erfindung bei der Montage einer Steuereinheit für ein Automatikgetriebe wird im folgenden im einzelnen unter Bezugnahme auf die Figuren 4 bis 7 erläutert. Die Montage der Steuereinheiten für Automatikgetriebe durch Arbeiter ermöglicht eine flexible Produktion derartiger Steuereinheiten für unterschiedlichste Getriebearten. Die Montagevorgänge sind sehr komplex, da eine Vielzahl, in der Größenordnung von 20, unterschiedlichster Einzelteile auf einer Montageplatte eingebaut werden müssen, wie Distanzringe, Stifte, Wellen, Federn. Die Einzelteile haben typischerweise Größen von wenigen Millimetern bis zu mehreren Zentimetern. Die Einzelteile müssen unter verschiedenen Bewegungsrichtungen miteinander verbunden werden. Eine Montage durch Automaten oder Roboter ist daher nicht ohne weiteres durchführbar.

Ein Arbeiter 1.10 (Fig. 3) sitzt dabei an einem Arbeitstisch T, wie er in Fig. 4 dargestellt ist. Auf diesem Arbeitstisch befinden sich eine Reihe von Fächern 0-20, die in Figur 4 dargestellt und mit den entsprechenden Ziffern bezeichnet sind. Der Arbeiter 1.10 blickt auf den Tisch T und auf eine Montageplatte M. Zur erfindungsgemäß vorgesehenen Erfassung und Analyse der Arbeitsvorgänge gehören die Elemente der Fig. 3, insbesondere eine Sensoreinrichtung 1.13, eine Einrichtung 1.14 zur Extraktion charakteristischer Arbeits-Verhaltenselemente, eine Vergleichseinrichtung 1.15, eine Arbeitseinrichtung zur Modellbildung 1.16, eine Speichereinrichtung 1.17 sowie eine Einrichtung 1.18 zur Ausgabe einer Aktion, wie eine Sprachausgabeeinheit 1.19, ohne dass diese noch einmal separat in der Fig. 4 dargestellt sind. Insofern wird auf die Fig. 3 verwiesen.

Bei der Montage einer solchen Steuereinheit ergreift der Arbeiter 1.10 ein oder mehrere Einzelteile und fügt diese zusammen sowie an entsprechenden Positionen der Montageplatte ein. Die Entscheidung, ob ein Einzelteil zu einem richtigen Zeitpunkt entnommen und damit richtig mit anderen Teilen bzw. der Montageplatte verbunden wurde, erfolgt beispielsweise direkt über die Analyse der Bewegung der Hand des Arbeiters 1.10 oder indirekt durch Überwachung der Flächer 0-20, wobei vorzugsweise zunächst ein Standard-Montageablauf automatisch oder interaktiv registriert wird, gegebenenfalls ein auf einen bestimmten Arbeiter abgestellter Individual-Standard-Arbeitsablauf, um Abweichungen bei der späteren Routinemontage zu detektieren und den Arbeiter 1.10 automatisch darauf hinzuweisen. Es können dabei vorgegebene Modelle der Hand Bewegungsmodelle derselben zur Erkennung bestimmter Greifvorgänge eingesetzt werden, wobei rechte und linke Hand identifiziert und hieraus Aufschlüsse auf die Qualität des Montagevorganges gezogen werden. Durch die Verfolgung der Hände kann festgestellt werden, wohin sich die gegriffenen Bauteile bewegen. Werden lediglich die Fächer überwacht, so kann zumindest die Entnahmereihenfolge und die Vollständigkeit der durchzuführenden Arbeitsschritte kontrolliert werden. Zur Vereinfachung der videobasierten Verfolgung der Hände können die Hände mit zusätzlichen Markierungen versehen werden, beispielsweise in Form farbiger Handschuhe.

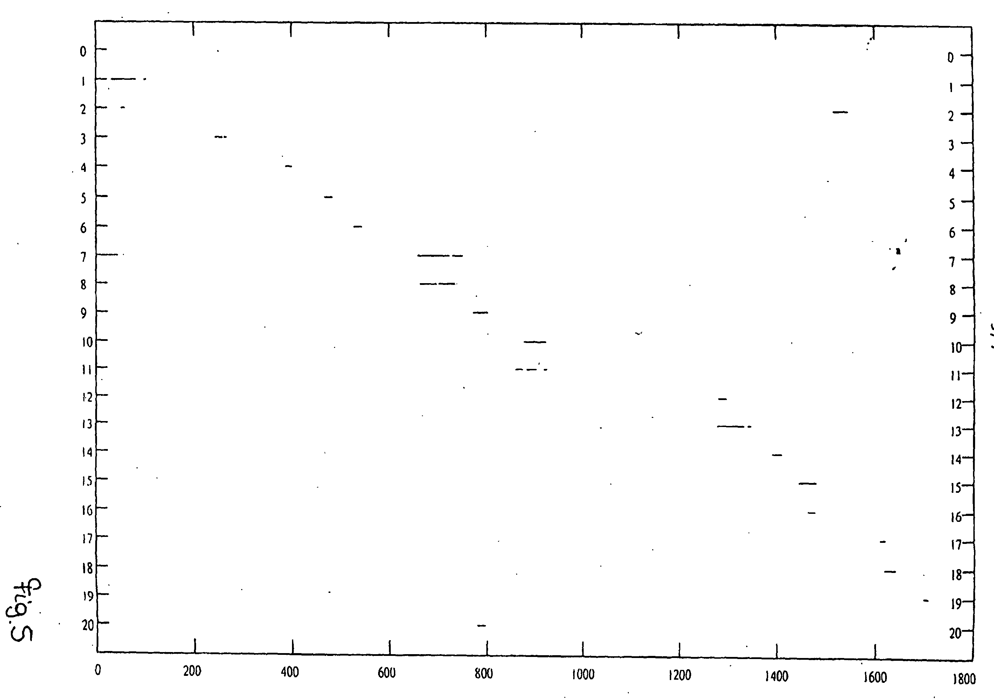

Die einzelnen Fächer 0-20 sind auf dem Arbeitstisch T in einer ergonomisch angepassten Weise angeordnet, wobei davon ausgegangen wird, dass die einzelnen Teile aus den Fächern 0-20 im wesentlichen in der durch die Nummerierung gegebenen Reihenfolge entnommen werden. Es ist erkennbar, dass vor allem im Anfangsstadium der Montage mit aufeinander folgenden Zahlen bezeichneten Teile an zueinander entfernten Stellen des Tisches angeordnet werden, beispielsweise die Teile des Faches 0, die als erstes diesem mit der rechten Hand entnommen werden sollten, rechts oben, die Teile des Faches 1, die als nächstes mit der linken Hand entnommen werden sollten, seitlich links und wiederum die Teile des Faches 2, die nach den Teilen des Faches 1 mit der rechten Hand aus dem Fach 2 entnommen werden, rechts vorne. Ähnliches gilt für die weiteren Fächer. Die durch einen Arbeiter vorgenommenen Montagezyklen werden durch eine Sensoreinrichtung 1.13, wie eine Videokamera aufgenommen. Ein solcher Montagezyklus ist graphisch in der Fig. 5 dargestellt, wo auf der Ordinate die Fächer 0-20 und damit die in diesen befindlichen Teile dargestellt sind, während auf der Abszisse eine Bildfolge aus zweitausend Einzelbildern wiedergegeben ist, die mit einer Abtastrate von 25 Bildern pro Sekunde aufgezeichnet wurden. Eine Markierung (horizontaler Strich) im Diagramm kennzeichnet einen Intervall von Bildern, bei denen eine Bewegung zu einem Fach (welches der Koordinatenposition entspricht) registriert wurde, was einer Aktivierung eines entsprechenden Montageteils in diesem Fach entspricht. Die Länge eines horizontalen Striches gibt somit die Dauer der Greifbewegungen an, die selbst aber nicht dargestellt sind. Im Diagramm ist auch nicht wiedergegeben, dass beispielsweise beim Zugreifen auf das Fach 20 die Fächer 13, 16 (zumindestens zum Teil) von der Hand des Arbeiters mit überdeckt werden. Im Rohdiagramm taucht zunächst auch eine Mitaktivierung dieser Fächer auf, die aber aufgrund der aus der Fig. 4 bekannten Anordnung der Fächer automatisch eliminiert werden kann; insofern ist das Diagramm der Fig. 5 um solche indirekt ausgelösten Fächer IA schon bereinigt.

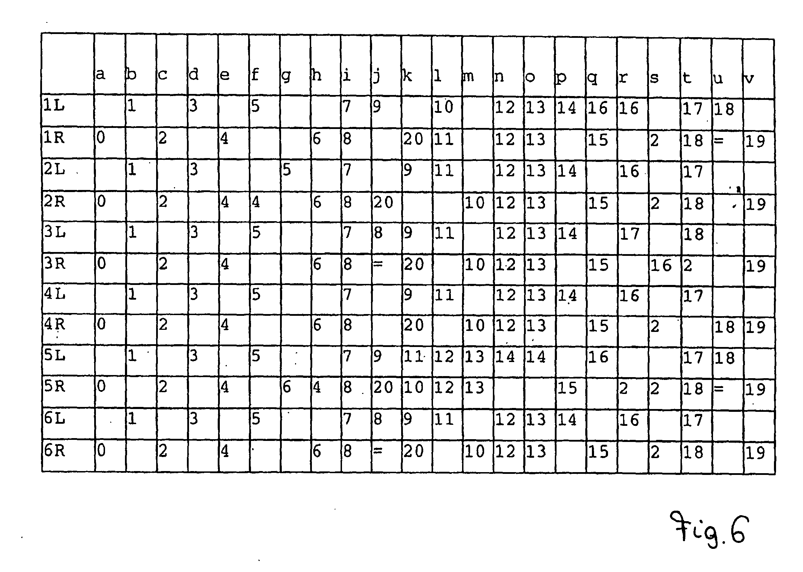

Die Tabelle der Fig. 6 zeigt für sechs Montagezyklen, in welcher Reihenfolge die Einzelteile aus den Fächern entnommen werden. Jeweils zwei Zeilen repräsentieren dabei einen Montagezyklus, wobei je eine Zeile eine Hand bezeichnet und zwar jeweils die erste Zeile (beispielsweise 1L die linke Hand) und die zweite Zeile (beispielsweise 1R) die rechte Hand.

Die Spalten a-v geben die zeitliche Reihenfolge ohne Berücksichtigung der gesamten Zeitdauer eines Zyklus (die unterschiedlich sein kann) wieder, wobei der besseren Übersicht halber sämtliche Montagefolgen auf diejenige mit der maximalen Schrittzahl (Montagefolge 5) gestreckt bzw. normiert wurden, so dass sich in den anderen Montagefolgen Leerschritte ergeben. Wird ein Greifvorgang der linken und der rechten Hand gleichzeitig durchgeführt, so stehen die Nummern der entsprechenden Fächer (Fig. 4) übereinander. Beispielsweise greift der Arbeiter 1.10 bei Eintrag (1L, i) und (1R, i) in der Tabelle gleichzeitig in die Fächer 7 (mit der linken Hand) und 8 (mit der rechten Hand). Dauert ein Greifvorgang der einen Hand so lange wie zwei Greifvorgänge der anderen Hand, so ist dies in der Tabelle durch ein "=" angedeutet. Beispielsweise führt der Arbeiter während des Greifvorgangs (1R, t) der rechten Hand die beiden Greifvorgänge (1L, t) und (1L, u) mit der linken Hand durch.

Es ist erkennbar, dass weitgehend die Reihenfolge der Montagevorgänge gleich bleibt, dass allerdings beispielsweise die Greifvorgänge 9 und 20 teils in vertauschter Reihenfolge, teils gleichzeitig ausgeführt werden. Entsprechendes gilt bei den Montagefolgen 2, 5 hinsichtlich des Faches 18. Teils wird mit zwei Händen in ein Fach gegriffen, beispielsweise greift der Arbeiter beim Greifvorgang (3R, i) und (6R, i) mit der rechten Hand in das Fach 8 und führt, nachdem der Greifvorgang (3L, i) bzw. (6L, i) der Montage eines Teils aus dem Fach 7 abgeschlossen ist, die linke Hand ebenfalls in das Fach 8, während sich die rechte dort noch befindet (Spalte j).

Es sind weiterhin ungewöhnliche Greifvorgänge erkennbar. So entnimmt der Arbeiter beim Greifvorgang (5R, h) Bauteile aus Fach 4 und legt sie auf dem Tisch ab. Beim Greifvorgang (5L, n) wird ein Fach -das Fach 14- ausgetauscht, bevor beim Schritt O auf dieses Fach zugegriffen wird. Bei beiden Vorgängen können Fehlerwarnungen ausgegeben werden.

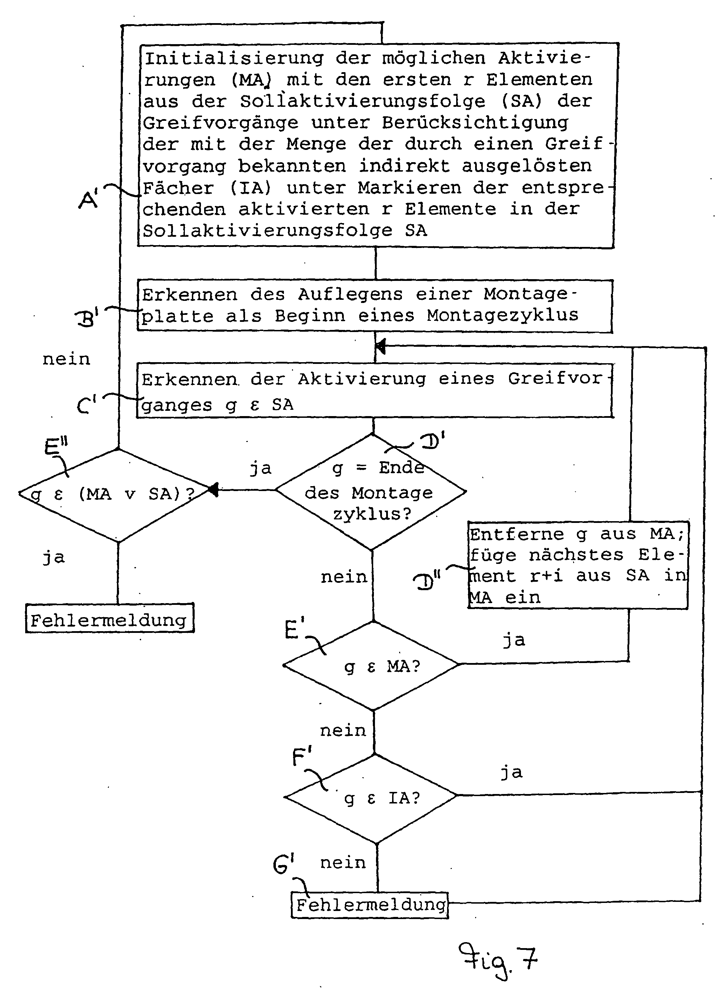

Ein an die Montage einer solchen Steuereinheit für ein automatisches Getriebe angepasster Verfahrensablauf ist in der Fig. 7 dargestellt.

Eine Soll-Aktivierungsreihenfolge SA der Greifvorgänge ist als Normverhalten des Arbeiters 1.10 vorgegeben. Für jeden Greifvorgang ist die Menge der durch einen solchen, wie oben erläutert, indirekt ausgelösten Fächer IA bekannt. Es erfolgt zunächst in einem Schritt A' die Initialisierung der möglichen Aktivierungen MA mit den ersten r Elementen aus der Soll-Aktivierungsfolge SA der Greifvorgänge unter Berücksichtigung der mit der Menge der durch einen Greifvorgang bekannten indirekt ausgelösten Fächer IA (wie oben beschrieben), unter Markieren der entsprechenden aktivierten Elemente in der Soll-Aktivierungsfolge SA.

In einem weiteren Schritt B' erfolgt ein Erkennen des Auflegens einer Montageplatte auf den Arbeitstisch als Beginn eines Montagezyklus.

In Schritt C' erfolgt ein Erkennen der Aktivierung eines Greifvorganges g aus der Menge der Soll-Aktivierungsfolgen SA.

In Schritt D' erfolgt eine Überprüfung, ob der entsprechende erkannte Vorgang das Ende des Montagezyklusses beinhaltet, beispielsweise bei Entfernen einer (nach Auffassung des Arbeiters) fertig montierten Montageplatte. In diesem Falle wird in Schritt E" überprüft, ob noch Greifvorgänge g als Elemente in der Menge der möglichen Aktivierungen MA bzw. unmarkiert in der Soll-Aktivierungsfolge SA enthalten sind. In diesem Falle wurde ein solches Element oder wurden solche Elemente im Montagezyklus nicht in die Steuereinheit eingebaut, diese ist damit fehlerhaft und es erfolgt eine Fehlermeldung. Sind keine solche Elemente mehr vorhanden, kann ein neuer Arbeitszyklus beginnen.

Ergibt sich bei der Abfrage D', dass der entsprechende Greifvorgang nicht das Ende des Montagezyklusses bezeichnet, so erfolgt in einem weiteren Überprüfungsschritt E' eine Überprüfung dahingehend, ob der Greifvorgang ein Element der Menge der möglichen Aktivierungen ist, also im entsprechenden Montageabschnitt zulässig ist. Ist dies der Fall, so erfolgt die Entfernung des Elements g aus der Menge der möglichen Aktivierungen. Es werden ein oder weitere Elemente aus der Menge der Soll-Aktivierungsfolgen SA in die Menge der möglichen Aktivierungen eingefügt (D'') und in der Soll-Aktivierungsfolge markiert. Im folgenden wird die Schrittfolge C', D' ... erneut eingeleitet, d.h. wiederum zunächst die Aktivierung eines Greifvorganges g erkannt. Es werden die entsprechenden Abfragen durchgeführt.

Ergab sich bei der Abfrage E', dass g kein Element der möglichen Aktivierungen MA ist, so erfolgt eine weitere Überprüfung dahingehend, ob der Greifvorgang ein Element (bei einem Greifvorgang auf ein anderes Fach) der indirekt ausgelösten Fächer IA ist (Schritt F'). In diesem Falle wird die Schrittfolge D', E' mit dem nächsten Greifschritt wieder durchgeführt werden. Ist dies nicht der Fall, so wurde auf einen falschen Fächer zugegriffen und es erfolgt eine entsprechende Fehlermeldung (Schritt G'). Auch in diesem Falle wird zu einem erneuten Erkennen eines Greifvorganges (Schritt C') zurückgekehrt, d.h. der Arbeiter 1.10 hat nun Gelegenheit, den richtigen Greifvorgang durchzuführen.

Während die Verfolgung eines Montagevorgangs vorstehenden Beispiels einer Steuereinheit für ein automatisches Getriebe anhand eines einfachen Beispiels durchgeführt wurde, können bei der Verfolgung auch neben der Berücksichtigung eines Modells der Hand und deren Bewegung insbesondere auch Bewegungsgeschwindigkeiten der Hand mitberücksichtigt werden: Bei einem Greifvorgang bewegt sich eine Hand zunächst mit höherer Geschwindigkeit auf ein Fach zu, wird langsamer und bleibt schließlich stehen, um den Greifvorgang durchzuführen und entfernt sich anschließend von dem Fach. Bei Berücksichtigung des Bewegungsvorganges und der Geschwindigkeiten kann die Verfolgung des Arbeitsvorganges verfeinert werden.

## Patentansprüche

1. Verfahren zum Unterstützen einer Person bei der Ausführung Wiederholgenauigkeit erfordernder Arbeitsvorgänge, wobei das Arbeitsverhalten der Person durch mindestens eine Sensoreinrichtung erfasst wird, **dadurch gekennzeichnet, dass** zumindest Elemente des Verhaltens der Person bei der regelmäßigen Durchführung des Arbeitsvorganges automatisch mit einem gespeicherten Abbild charakteristischer Elemente des normalen Verhaltens der Person bei korrekter Ausführung des Arbeitsvorganges verglichen werden und bei Abweichungen spätestens während des Arbeitsvorganges automatisch eine Aktion ausgeführt wird.

2. Verfahren nach Anspruch 1, **dadurch gekennzeichnet, dass** das Verhalten der Person im Vorfeld der eigentlichen, die Genauigkeit erfordernden Arbeitsschritte erfasst und schon bei Abweichungen im Vorfeld-Verhalten eine Aktion ausgelöst wird.

3. Verfahren nach Anspruch 1 oder 2, **dadurch gekennzeichnet, dass** das Verhalten der Person in unmittelbarem Zusammenhang mit der Ausführung, insbesondere eines die Genauigkeit erfordernden Arbeitsschritts erfasst und bei Abweichungen eine Aktion ausgelöst wird.

4. Verfahren nach einem der vorangehenden Ansprüche, **dadurch gekennzeichnet, dass** Toleranzbereiche zu den Norm-Verhaltenselementen festgelegt und erst bei Überschreiten der Toleranzbereiche eine Aktion ausgeführt wird.

5. Verfahren nach einem der vorangegangenen Ansprüche, **dadurch gekennzeichnet, dass** das Abbild der Normverhaltenselemente durch Modellbildung erzeugt wird.

6. Verfahren nach einem der Ansprüche 1 bis 4, **dadurch gekennzeichnet, dass** das Verhalten der den Arbeitsvorgang ausführender Person bei korrekter Ausführung erfasst und zur Bildung des Abbilds verwendet wird.

7. Verfahren nach einem der vorangehenden Ansprüche, **dadurch gekennzeichnet, dass** die Aktion optische und/oder akustische Ereignisse aufweist.

8. Verfahren nach Anspruch 6, **dadurch gekennzeichnet, dass** die Aktion eine Sprachanweisung beinhaltet.

9. Vorrichtung zum Unterstützen einer Person bei der Ausführung Genauigkeit erfordernder Arbeitsvorgänge mit mindestens eine Sensor-Einrichtung zur Erfassung des tatsächlichen Arbeits-Verhaltens der Person bei der wiederholten Durchführung des Arbeitsvorganges, **gekennzeichnet durch** ein gespeichertes Abbild von zumindest charakteristischen Elementen des normalen Verhaltens der Person im Zusammenhang mit der Ausführung des Arbeitsvorganges, **durch** eine Vergleichs-Einrichtung zum Vergleichen zumindest der Norm-Verhaltenselemente mit dem Arbeits-Verhalten und **durch** eine Einrichtung zur Ausgabe einer Aktion spätestens während des Arbeitsvorgangs bei Abweichung von Arbeits-Verhaltenselementen von Norm-Verhaltenselementen.

10. Vorrichtung nach Anspruch 9, **gekennzeichnet durch** eine Analyse-Einrichtung zur Analyse des Arbeitsvorganges und eine Extraktions-Einrichtung zur Extraktion charakteristischer Arbeits-Elemente des Arbeitsvorganges.

11. Vorrichtung nach Anspruch 9 oder 10, **gekennzeichnet durch** eine Einrichtung zur Definition eines Toleranzbereiches für Verhaltenselemente.

12. Vorrichtung nach einem der Ansprüche 9 bis 11, **gekennzeichnet durch** Ausgabeeinrichtungen zur Ausgabe optischer und/oder akustischer Ereignisse.

13. Vorrichtung nach Anspruch 12, **gekennzeichnet durch** eine Sprachausgabe-Einrichtung.

## Claims

1. Method for assisting a person when performing repeat precision-requiring operations, the work behaviour of the person being detected by at least one sensor means, **characterized in that** at least certain elements of the behaviour of the person in the case of regular performance of the operation are automatically compared with a stored image of characteristic elements of the normal behaviour of the person when correctly performing the operation and in the case of deviations an action is automatically implemented, at the latest during the operation.

2. Method according to claim 1, **characterized in that** the behaviour of the person is detected in the forefield or prior to the actual work steps requiring precision and an action is initiated in the case of deviations in the forefield behaviour.

3. Method according to claim 1 or 2, **characterized in that** the behaviour of the person is detected in a direct association with the implementation in particular of a precision-requiring work step and an action is initiated in the case of deviations.

4. Method according to one of the preceding claims, **characterized in that** tolerance ranges with respect to the standard behavioural elements are fixed and an action is only initiated on passing beyond the tolerance ranges.

5. Method according to one of the preceding claims, **characterized in that** the image of the standard behavioural elements is produced by model formation.

6. Method according to one of the claims 1 to 4, **characterized in that** the behaviour of the person performing the operation is detected during correct implementation and used for forming the image.

7. Method according to one of the preceding claims, **characterized in that** the action involves optical and/or acoustic events.

8. Method according to claim 6, **characterized in that** the action comprises a voice instruction.

9. Device for assisting a person in performing precision-requiring operations with at least one sensor means for detecting the actual work behaviour of the person during the repeated performance of the operation, **characterized by** a stored image of at least characteristic elements of the normal behaviour of the person associated with the performance of the operation, by a comparator for comparing at least the standard behavioural elements with the work behaviour and by a device for outputting an action, at the latest during the operation, in the case of a deviation of the work behavioural elements from the standard behavioural elements.

10. Device according to claim 9, **characterized by** an analyzing device for analyzing the operation and an extracting device for extracting characteristic work elements of the operation.

11. Device according to claim 9 or 10, **characterized by** a device for defining a tolerance range for behavioural elements.

12. Device according to one of the claims 9 to 11, **characterized by** outputting devices for outputting optical and/or acoustic events.

13. Device according to claim 12, **characterized by** a voice output device.

## Revendications

1. Procédé permettant d'assister une personne lors de l'exécution de processus de travail exigeant de la précision dans la répétition, dans lequel le comportement en travail de la personne est enregistré par au moins un dispositif de détection, **caractérisé en ce que** l'on compare automatiquement au moins des éléments du comportement de la personne lors de l'exécution régulière du processus de travail à une représentation mémorisée d'éléments caractéristiques du comportement normal de la personne lors de l'exécution correcte du processus de travail et **en ce qu'**en cas de divergence, une action est exécutée automatiquement au plus tard durant le processus de travail.

2. Procédé selon la revendication 1, **caractérisé en ce que** l'on enregistre le comportement de la personne dans la phase préliminaire des étapes proprement dites du travail exigeant de la précision et **en ce qu'**une action est déjà déclenchée lors de divergences dans le comportement de phase préliminaire.

3. Procédé selon la revendication 1 ou 2, **caractérisé en ce que** l'on enregistre le comportement de la personne en relation directe avec l'exécution d'une étape de travail, en particulier d'une étape exigeant de la précision, et **en ce qu'**en cas de divergence, une action est déclenchée.

4. Procédé selon l'une quelconque des revendications précédentes, **caractérisé en ce que** l'on définit des zones de tolérance par rapport aux éléments comportementaux normalisés et **en ce qu'**une action n'est déclenchée que lorsque les zones de tolérance sont franchies.

5. Procédé selon l'une quelconque des revendications précédentes, **caractérisé en ce que** la représentation des éléments comportementaux normalisés est générée par la formation d'un modèle.

6. Procédé selon l'une quelconque des revendications 1 à 4, **caractérisé en ce que** le comportement de la personne exécutant le processus de travail est enregistré lorsque l'exécution est correcte et est utilisé pour constituer la représentation.

7. Procédé selon l'une quelconque des revendications précédentes, **caractérisé en ce que** l'action présente des événements optiques et/ou acoustiques.

8. Procédé selon la revendication 6, **caractérisé en ce que** l'action contient une instruction langage.

9. Procédé permettant d'assister une personne lors de l'exécution de processus de travail exigeant de la précision comprenant au moins un dispositif de détection pour enregistrer le comportement en travail effectif de la personne lors de l'exécution répétée du processus de travail, **caractérisé par** une représentation mémorisée au moins d'éléments caractéristiques du comportement normal de la personne en relation avec l'exécution du processus de travail, par un dispositif de comparaison pour comparer au moins les éléments comportementaux normalisés au comportement en travail et par un dispositif de génération d'une action, au plus tard au cours du processus de travail, en cas de divergence d'éléments comportementaux en travail par rapport à des éléments comportementaux normalisés.

10. Dispositif selon la revendication 9, **caractérisé par** un dispositif d'analyse pour analyser le processus de travail et un dispositif d'extraction pour extraire des éléments de travail caractéristiques du processus de travail.

11. Dispositif selon la revendication 9 ou 10, **caractérisé par** un dispositif de définition d'une zone de tolérance pour les éléments comportementaux.

12. Dispositif selon l'une quelconque des revendications 9 à 11, **caractérisé par** des dispositifs générateurs pour générer des événements optiques et/ou acoustiques.

13. Dispositif selon la revendication 12, **caractérisé par** un dispositif de génération de langage.
